# DEMANDE DE BREVET EUROPEEN

(11) **EP 1 419 704 A1**
(43) Date de publication de la demande: **19.05.2004**
(21) Numéro de dépôt: 03292823.6
(22) Date de dépôt: 14.11.2003
(51) Int. Cl.: A23L 1/232, A23C 9/156, A23L 1/221

(54) **Procédé de préparation agroalimentaire à base de chêne**

(30) Priorité: 15.11.2002 FR 0214323
(71) Demandeur: Marechau, Jean-Pierre François, 36220 Linge (FR)
(72) Inventeur: Marechau, Jean-Pierre, 36220 Linge (FR)
(74) Mandataire: Debay, Yves

(57) **Abrégé**

Le procédé de préparation agroalimentaire d'une composition à base de chêne s'effectue à partir d'une substance liquide formée notamment d'au moins un laitage et/ou une substance alimentaire grasse. Des fragments de chêne torréfiés (20) sont introduits (1) dans cette substance liquide pour former un mélange hétérogène. Puis le mélange est chauffé (3) jusqu'à une température seuil d'au moins 50°C. Une étape d'extraction (4) des fragments de chêne torréfiés (20) permet d'obtenir une composition liquide à base de chêne.

La composition agroalimentaire liquide à base de chêne obtenue par le procédé comprend un laitage et/ou une substance alimentaire grasse formant une huile ou une crème liquide et des extraits libérés à chaud de fragments de chêne torréfiés (20).

## Description

La présente invention concerne le domaine des produits alimentaires. Elle concerne plus particulièrement un procédé de préparation agroalimentaire d'une composition à base de chêne, destinée notamment à la confection de sauces d'accompagnement.

En général, les plats sont accompagnés de sauces d'origine diverse pour apporter une saveur particulière à l'ensemble. Les préparations connues possèdent toutefois rarement une saveur boisée qui soit d'un goût agréable, comme par exemple la saveur, méconnue, liée aux arômes du chêne.

La présente invention a donc pour objet de pallier un ou plusieurs des inconvénients de l'art antérieur en définissant un procédé de préparation agroalimentaire à base de chêne permettant d'obtenir de manière simple et rapide des arômes du chêne.

Cet objectif est atteint grâce à un procédé de préparation agroalimentaire d'une composition à base de chêne, à partir d'une substance liquide formée notamment d'au moins un laitage et/ou une substance alimentaire grasse, caractérisé en ce qu'il comporte :
- une étape d'introduction de fragments de chêne torréfiés dans ladite substance liquide pour former un mélange hétérogène,
- une étape d'élévation de température de ladite composition jusqu'à une température dite seuil d'au moins 50°C,
- une étape d'extraction des fragments de chêne de la composition.

Selon une autre particularité, ladite introduction des fragments de chêne torréfiés est réalisée au plus tard lorsque ladite température seuil est atteinte, lesdits fragments de chêne consistant en des copeaux, chaque fragment de chêne ayant une masse inférieure à 2 grammes.

Selon une autre particularité, ladite substance liquide comprend une huile, lesdits fragments de chêne étant chauffés avec cette substance dans l'intervalle de températures variant entre 130 et 190°C.

Selon une autre particularité, ladite substance liquide comprend une crème liquide du type crème de cuisson, la phase de chauffage desdits fragments de chêne avec ladite substance liquide étant réalisée à une température inférieure à 100°C.

Selon une autre particularité, ladite crème liquide est une crème stérilisée du type UHT ou analogue, une substance de saveur sucrée ou salée étant mélangée à ladite crème liquide.

Selon une autre particularité, une étape de maintien à une température de chauffage déterminée succède à ladite élévation de température pour former une phase de chauffe, ladite température de chauffage déterminée, inférieure ou égale à ladite température seuil, étant sensiblement conservée pendant une durée déterminée inférieure à 100 minutes.

Selon une autre particularité, une étape d'homogénéisation est effectuée après l'introduction desdits fragments de chêne, au moins avant l'étape de maintien à la température de chauffage déterminée, la concentration des fragments de chêne introduits dans ladite substance liquide étant au moins égale à 1 g/L.

Selon une autre particularité, ladite étape d'extraction desdits fragments de chêne comprend une filtration, l'extraction s'effectuant après libération à chaud d'extraits dans ladite substance liquide par les fragments de chêne torréfiés.

Selon une autre particularité, ladite substance liquide comprend une substance de saveur sucrée et du lait, une agitation à froid après l'étape d'extraction et une réfrigération étant effectuées pour glacer la composition.

Un autre objectif de l'invention est de proposer une composition agroalimentaire liquide à base de chêne.

Ce deuxième objectif est atteint par une composition agroalimentaire liquide à base de chêne, caractérisée en ce qu'elle comprend :
- au moins un laitage et/ou une substance alimentaire grasse formant une huile ou une crème liquide,
- des extraits libérés à chaud de fragments de chêne torréfiés.

Un autre objectif de l'invention est de proposer une utilisation de la composition agroalimentaire liquide à base de chêne pour la fabrication de yaourts.

Ce troisième objectif est atteint par une utilisation de la composition agroalimentaire liquide à base de chêne, caractérisée en ce que la composition agroalimentaire sert à la préparation d'un yaourt, au moins un ferment lactique acidifiant étant introduit dans ladite composition, ladite composition étant chauffée avec ledit ferment lactique à une température inférieure à 50°C.

L'invention, avec ses caractéristiques et avantages, ressortira plus clairement à la lecture de la description faite en référence aux dessins annexés donnés à titre d'exemples non limitatifs dans lesquels :

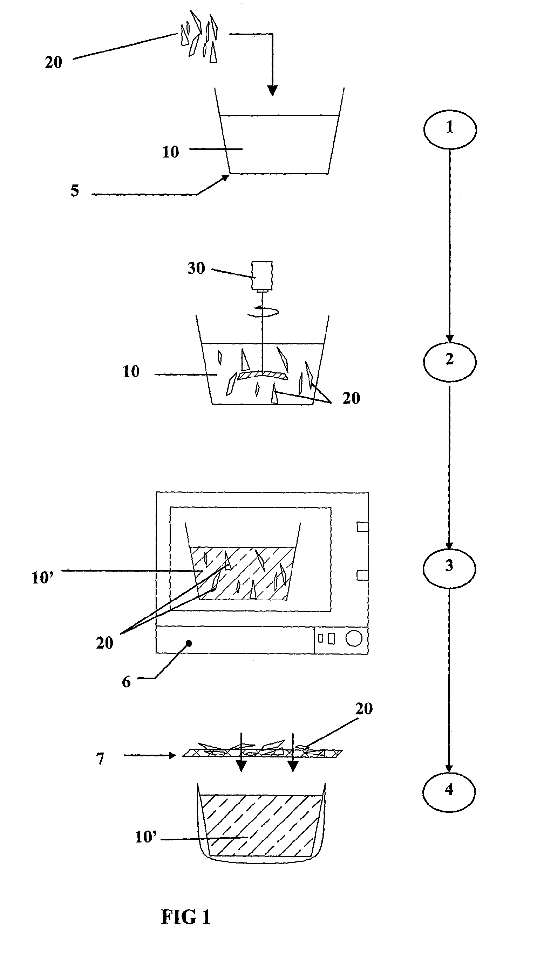

- la figure 1 représente un exemple de succession d'étapes pour la réalisation du procédé selon l'invention.

Le procédé de préparation agroalimentaire d'une composition (10') à base de chêne selon l'invention fait intervenir notamment deux constituants essentiels : une crème liquide (10) et un ou plusieurs fragments de chêne torréfiés (20). Dans le mode de réalisation préféré de l'invention, les fragments de chêne torréfiés (20) sont des copeaux de taille réduite, pesant par exemple moins de 2 grammes chacun. De manière non limitative, le chêne peut être du genre Quercus, par exemple Quercus Alba, Quercus Pédonculata ou Quercus Sessiliflora. Il peut également s'agir d'un type de chêne proche utilisé en tonnellerie.

Les copeaux de chêne torréfiés utilisés dans l'invention peuvent être obtenus par un traitement en trois temps de copeaux de chêne brut. Dans un premier temps, le traitement du chêne vise à évacuer l'eau du bois, par exemple à des températures de l'ordre de 100°C. Cette évacuation de l'eau du bois se fait à des températures moyennement élevées pour ne pas risquer de cuire le bois. Dans un second temps, une préchauffe du chêne est effectuée pour évaporer les gaz et/ou particules indésirables, par exemple à une température supérieure à 140°C. Enfin, dans un troisième temps, on élève doucement la température, par exemple par pallier. Les fragments de chêne torréfiés (20) par l'intermédiaire d'un processus du type susmentionné ou ayant subi un séchage et des étapes de chauffe successives pour libérer des arômes du chêne peuvent servir de constituants de départ pour la présente invention. A titre d'exemple et de manière non limitative, le procédé selon l'invention peut être réalisé à partir de copeaux de chêne torréfiés de la marque déposée "Pronektar" de type medium.

Dans le mode de réalisation de l'invention représenté à la figure 1, le processus de préparation débute en versant la crème liquide (10) dans un récipient de cuisine classique (5). Cette crème liquide (10) consiste en une substance liquide formée notamment d'au moins un laitage et/ou une substance alimentaire grasse. Cette crème liquide (10) peut être simplement du type crème de cuisson, par exemple une crème stérilisée du type UHT ou analogue. L'élaboration de la composition (10') à base de chêne comprend une première étape correspondant à d'introduction (1) dans ladite crème liquide (10) des fragments de chêne torréfiés (10), comme représenté à la figure 1, afin de former un milieu hétérogène constitué d'éléments solides dispersés dans un milieu liquide. Naturellement, ladite crème (10) pourrait tout aussi bien être versée sur des fragments de chêne torréfiés (20).

Dans le mode de réalisation présenté à la figure 1, la deuxième étape correspond à une agitation (2) du mélange formé lors de la première étape pour homogénéiser la répartition des fragments de chêne torréfiés (20) dans la crème liquide (10). Cette agitation (2) peut être effectuée à l'aide d'un instrument simple tel que le fouet de cuisine manuel, par un agitateur mécanique motorisé (30), par un système à vibrations ou à ultrasons. Dans des variantes, cette étape d'agitation (2) peut être enlevée, notamment si ladite crème liquide (10) est très peu visqueuse. Une telle agitation peut évidemment être répétée, une ou plusieurs fois, à des stades ultérieurs de l'élaboration de la préparation à base de chêne. L'agitation (2) peut être continue ou discontinue et suffisamment modérée pour ne pas créer des forces de cisaillement importantes susceptibles de casser les fragments de chêne torréfiés (20).

L'élaboration de la préparation à base de chêne comprend une phase de chauffe (3) réalisée directement à la suite de la première étape (1) ou à la suite de la deuxième étape (2). Le récipient de cuisine (5) utilisé est par exemple en matériau conducteur de chaleur de façon à faciliter le chauffage du mélange de la crème liquide (10) avec lesdits fragments de chêne (20). Cette chauffe (3) est effectuée au four (6) ou à l'aide d'une plaque de cuisson ou n'importe quelle autre source de chaleur d'un type connu. Dans un mode de réalisation de l'invention, une étape de maintien à une température de chauffage déterminée succède à une élévation de température pour former ladite phase de chauffe (3). Cette phase de chauffe (3) est réalisée à une température inférieure à 100°C. L'étape d'élévation de température s'effectue jusqu'à une température dite seuil avoisinant par exemple 100°C. Cette température peut éventuellement dépasser de peu 100°C mais la puissance de chauffe lors du maintien à une température de chauffage déterminée est alors abaissée pour assurer une chauffe à ladite température de chauffage déterminée, s'élevant à 90°C par exemple. Cette température est inférieure ou égale à ladite température seuil et est conservée pendant une durée inférieure à 100 minutes, par exemple une vingtaine de minutes. Dans un mode de réalisation de l'invention, l'introduction (1 ) des fragments de chêne torréfiés (20) peut être effectuée au cours de l'élévation de température, de préférence lorsque la température de la crème liquide (10) est encore inférieure à ladite température de chauffage déterminée. L'ajout desdits fragments de chêne (20) peut être progressif et est effectué au plus tard lorsque la température seuil est atteinte. Une agitation (2) peut éventuellement accompagner cette introduction (1).

Au cours de la phase de chauffe (3), les fragments de chêne torréfiés (20) libèrent des extraits aux arômes boisés, de vanilline et d'amande grillée par exemple. La composition crémeuse (10') obtenue est donc riche de nombreux arômes provenant des fragments torréfiés (20) de chêne. Comme représenté à la figure 1, une quatrième étape d'extraction (4) desdits fragments de chêne (20) est réalisée par l'intermédiaire d'une couche de filtration ou un instrument filtrant (7) tel qu'un chinois. Le filtrat est ainsi débarrassé des fragments de chêne torréfiés (20) et constitue une composition crémeuse liquide (10') contenant les extraits libérés à chaud desdits fragments de chêne (20). Ces extraits se diffusent dans le mélange liquide. Une substance de saveur sucrée ou salée est mélangée à ladite crème liquide (10) en fonction de l'utilisation souhaitée. L'extraction (4) peut également être réalisée par d'autres méthodes de séparation connues, incluant une filtration ou non, comme par exemple la centrifugation.

Dans un mode de réalisation de l'invention, l'introduction des fragments de chêne torréfiés (20) est dosée de façon à ce que la concentration en fragments (20) soit supérieure à 1 g/L, par exemple de l'ordre de 3 à 10 g/L. La crème liquide (10) peut être remplacée par une autre substance liquide comprenant au moins un laitage et/ou une substance alimentaire grasse. Dans une variante, cette substance liquide est par exemple de l'huile d'un type connu comme l'huile d'olive ou de tournesol. Lorsque la substance liquide dans laquelle sont introduits les fragments torréfiés (20) est constituée d'huile, les fragments torréfiés (20) sont chauffés avec cette huile dans l'intervalle de températures variant entre 130 et 190°C. L'huile à base de chêne ainsi obtenue est particulièrement parfumée, avec une saveur boisée, et peut être utilisée notamment pour la cuisson et des grillades.

Un exemple d'utilisation pratique de l'invention est l'accompagnement de viandes ou de poissons pour apporter une saveur de chêne. Ainsi, une composition liquide crémeuse (10') aux extraits de chêne, salée, peut être utilisée à chaud pour être nappée sur un filet de sandre. Elle constitue par exemple une alternative aux accompagnements classiques tels que citron et persil. Pour cette utilisation, on peut se servir de 6 à 8 grammes de copeaux de chêne torréfiés et d'un litre de crème liquide UHT mélangés à froid (2), chauffés (3) moins d'une demi-heure à 90°C. Un chinois suffit à retirer les copeaux de chêne de la composition liquide crémeuse (10') obtenue. Du sel est par exemple ajouté lors de la chauffe (3).

L'invention peut également être employée pour obtenir des desserts glacés tels que sorbets, glaces italiennes ou autres glaces. Dans un mode de réalisation de l'invention, la substance liquide de départ comprend une substance de saveur sucrée et du lait. Après introduction (1) de copeaux de chêne torréfiés, chauffe (3) et extraction (4) desdits copeaux, une agitation à froid et une réfrigération sont effectuées pour glacer la composition sucrée obtenue. Les ingrédients de départ peuvent être simples dans une recette de glace au chêne, par exemple:
- un mélange d'un litre de crème liquide UHT avec 2 L de lait demi-écrémé UHT,
- 200 g de sucre semoule à ajouter par litre,
- 10 g de copeaux de chêne torréfiés à ajouter par litre.

La préparation de la glace au chêne peut consister alors mélanger (2) à froid le lait, la crème, le sucre et les copeaux de chêne, puis chauffer (3) en portant le tout à ébullition, en laissant frémir pendant 20 à 25 min avec agitation. Après extraction (4) des copeaux et refroidissement, on turbine le mélange obtenu pendant une dizaine de minutes avant de le stocker dans un récipient à l'intérieur d'un appareil de congélation.

L'invention peut être aussi avantageusement utilisée pour la fabrication de yaourts aromatisés. Ainsi, il est possible d'utiliser la composition agroalimentaire obtenue après l'extraction (4) des fragments de chêne torréfiés (20) pour la préparation d'un yaourt. Au moins un ferment lactique acidifiant est introduit dans la composition obtenue selon l'invention. Après une étape de mélange, et de léger chauffage avec ledit ferment lactique à une température inférieure à 50°C, puis un refroidissement, on obtient un yaourt comportant les arômes spécifiques du chêne. La chauffe de la composition selon l'invention avec des ferments lactiques s'effectue par exemple entre 30 et 40°C.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de préparation agroalimentaire d'une composition à base de chêne, à partir d'une substance liquide formée notamment d'au moins un laitage et/ou une substance alimentaire grasse, **caractérisé en ce qu'**il comporte :
- une étape d'introduction (1) de fragments de chêne torréfiés (20) dans ladite substance liquide pour former un mélange hétérogène,
- une étape d'élévation de température de ladite composition jusqu'à une température dite seuil d'au moins 50°C,
- une étape d'extraction (4) des fragments de chêne (20) de la composition.

2. Procédé selon la revendication 1 ou 2, dans lequel ladite introduction (1 ) des fragments de chêne torréfiés (20) est réalisée au plus tard lorsque ladite température seuil est atteinte, lesdits fragments de chêne (20) consistant en des copeaux, chaque fragment de chêne (20) ayant une masse inférieure à 2 grammes.

3. Procédé selon l'une quelconque des revendications 1 à 3, dans lequel ladite substance liquide comprend une huile, lesdits fragments de chêne (20) étant chauffés avec cette substance dans l'intervalle de températures variant entre 130 et 190°C.

4. Procédé selon l'une quelconque des revendications 1 à 3, dans lequel ladite substance liquide comprend une crème liquide (10) du type crème de cuisson, la phase de chauffage desdits fragments de chêne (20) avec ladite substance liquide étant réalisée à une température inférieure à 100°C.

5. Procédé selon la revendication 4, dans lequel ladite crème liquide (10) est une crème stérilisée du type UHT ou analogue, une substance de saveur sucrée ou salée étant mélangée à ladite crème liquide (10).

6. Procédé selon l'une quelconque des revendications 1 à 5, dans lequel une étape de maintien à une température de chauffage déterminée succède à ladite élévation de température pour former une phase de chauffe (3), ladite température de chauffage déterminée, inférieure ou égale à ladite température seuil, étant sensiblement conservée pendant une durée déterminée inférieure à 100 minutes.

7. Procédé selon la revendication 6, dans lequel une étape d'homogénéisation est effectuée après l'introduction desdits fragments de chêne (20), au moins avant l'étape de maintien à la température de chauffage déterminée, la concentration des fragments de chêne (20) introduits dans ladite substance liquide étant au moins égale à 1 g/L.

8. Procédé selon l'une quelconque des revendications 1 à 7, dans lequel ladite étape d'extraction (4) desdits fragments de chêne (20) comprend une filtration, l'extraction (4) s'effectuant après libération à chaud d'extraits dans ladite substance liquide par les fragments de chêne torréfiés (20).

9. Procédé selon l'une quelconque des revendications 1 à 2 et 4 à 8, dans lequel ladite substance liquide comprend une substance de saveur sucrée et du lait, une agitation à froid après l'étape d'extraction (4) et une réfrigération étant effectuées pour glacer la composition.

10. Composition agroalimentaire liquide à base de chêne obtenue par le procédé selon l'une des revendications 1 à 9, **caractérisée en ce qu'**elle comprend :
- au moins un laitage et/ou une substance alimentaire grasse formant une huile ou une crème liquide,
- des extraits libérés à chaud de fragments de chêne torréfiés (20).

11. Utilisation de la composition agroalimentaire liquide à base de chêne selon la revendication 10, **caractérisée en ce que** la composition agroalimentaire sert à la préparation d'un yaourt, au moins un ferment lactique acidifiant étant introduit dans ladite composition, ladite composition étant chauffée avec ledit ferment lactique à une température inférieure à 50°C.
